(19) Europäisches Patentamt
European Patent Office
Office européen des brevets

(11) EP 1 895 613 B1

(12) **EUROPEAN PATENT SPECIFICATION**

(45) Date of publication and mention of the grant of the patent:
**04.04.2012 Bulletin 2012/14**

(21) Application number: **06767285.7**

(22) Date of filing: **19.06.2006**

(51) Int Cl.:
***C08K 5/07*** *(2006.01)* ***C08K 5/375*** *(2006.01)*
***H01B 1/12*** *(2006.01)* ***H01M 8/10*** *(2006.01)*
***H01M 10/0565*** *(2010.01)* ***H01M 10/0567*** *(2010.01)*
*H01M 10/052* *(2010.01)*

(86) International application number:
**PCT/JP2006/312668**

(87) International publication number:
**WO 2006/135114 (21.12.2006 Gazette 2006/51)**

(54) **ELECTROLYTE CONTAINING OXOCARBON MOLECULE AND USE THEREOF**

ELEKTROLYT MIT OXYCARBONMOLEKÜL UND VERWENDUNG DESSELBEN

ÉLECTROLYTE CONTENANT UNE MOLÉCULE D OXOCARBONE ET SON UTILISATION

(84) Designated Contracting States:
**DE FR GB**

(30) Priority: **17.06.2005 JP 2005177620**

(43) Date of publication of application:
**05.03.2008 Bulletin 2008/10**

(73) Proprietor: **Sumitomo Chemical Company, Limited**
**Tokyo 104-8260 (JP)**

(72) Inventors:
- **YOSHIMURA, Ken**
**Tsukuba-shi**
**Ibaraki (JP)**
- **ISHITOBI, Masamitsu**
**3050045 (JP)**

(74) Representative: **Vossius & Partner**
**Siebertstrasse 4**
**81675 München (DE)**

(56) References cited:
**JP-A- 2 123 723** **JP-A- 01 204 031**
**JP-A- 11 340 097** **JP-A- 2001 512 526**
**JP-A- 2005 108 459** **US-A- 6 004 698**
**US-A- 6 099 988**

- **CHICKOS J.S.: 'Aryltrichlorocyclopropenes and Arylhydroxycyclopropenones' J. ORG. CHEM. vol. 39, no. 12, 1974, pages 1647 - 1650, XP003005104**

Remarks:
The file contains technical information submitted after the application was filed and not included in this specification

EP 1 895 613 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to an electrolyte containing an oxocarbon molecule and the use thereof.

BACKGROUND ART

It is known that oxocarbon molecules, as typified by squaric acid (Quadratic acid), have a high degree of acidity because they have a stable structure due to resonance in the state where hydrogen is dissociated at the oxocarbon group (Oxocarbons, p. 45 (Edited by Robert West), Academic Press (1980), (ISBN: 0-12-744580-3) (Journal of the American Chemical Society, 95, 8703 (1973)).

On the other hand, it is known that polymer compounds having a sulfonic acid group are useful as polymer electrolytes used in polymer electrolyte fuel cells, and the like. As the polymer electrolyte, for example, fluorine-containing polymers including Nafion (registered trade mark of Du Pont), polymers in which a sulfonic acid group is introduced into polyether ketones (US. 5, 438, 082), polymers in which a sulfonic acid group is introduced intopolyether sulfones (J. Membrane Science, 83, 211 (1993)), polymers in which a sulfonic acid group is introduced into polyimides (Japanese Patent Application Laid-Open Publication No. 2003-277501), polymers in which a sulfonic acid group is introduced into polyphenylenes (US 5,403,675), and the like are proposed.

The use of oxocarbon molecules in polymer electrolytes or electrolytic solutions has already been described in the prior art, as for example with squaric acid (3,4-dihydroxy-3-cyclobutene-1,2-dione) (US 6 099 988 A, JP 11 340097 A or JP 2 123723 A) or a di-alkali metal salt thereof (US 6 004 698 A), rhodizonic acid and the disodium salt thereof (JP 2005 108459 A) or 4,5-dihydroxy-4-cyclopentene-1,2-3-trione (JP 2 123723 A).

DISCLOSURE OF THE INVENTION

However, the relationship between the difference in heat of formation, between the state where the hydrogen ion is non-dissociated and the state where the hydrogen ion is dissociated, and a proton conductivity was not known.

The present inventors have produced electrolytes which contain an oxocarbon molecule satisfying a specific formula that focuses attention on the difference in heat of formation, and have repeated various studies. As a result, they have found that the electrolyte containing such an oxocarbon molecule is useful as a material for a proton conductive membrane of a solid polymer fuel cell utilizing a gas fuel such as hydrogen gas or a liquid fuel methanol or dimethyl ether, in other words, useful as a material for a polymer electrolyte, and that it has higher proton conductivity than conventional electrolytes do; and they have completed the present invention.

That is, the present invention relates to

[1] an electrolyte characterized by containing an oxocarbon molecule, wherein the oxocarbon molecule has a difference in heat of formation ΔE defined as:

$$\Delta E = E_2 - E_1 \ (kcal/mol)$$

satisfying the range of

$$\Delta E < -70 \ (kcal/mol),$$

wherein $E_1$ (kcal/mol) is a heat of formation in the state where the hydrogen ion is non-dissociated, and $E_2$ (kcal/mol) is a heat of formation in the state where the hydrogen ion having the lowest dissociation energy in the molecule is dissociated, both being calculated in regard to the stabilized molecular structure in accordance with a molecular orbital method, and wherein the oxocarbon molecule in the state where the hydrogen ion is non-dissociated is, in a free acid form, represented by the following formula (1) :

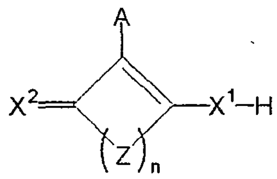 (1)

wherein $X^1$ and $X^2$ are each independently -O-, -S- or -NR-; Z is -CO-, -C(S)-, -C(NR')-, an alkylene group that may have a substituent or an arylene group that may have a substituent, in which R and R' are each independently hydrogen atom, an alkyl group having 1 to 6 carbon atoms that may have a substituent, or an aryl group having 6 to 10 carbon atoms that may have a substituent; n is the number of repeating units of an integer of 0 to 10; n pieces of Z may be the same as or different to each other; and A is a monovalent hydrocarbon group;

[2] the electrolyte described in [1], characterized in that the state where the hydrogen ion having the lowest dissociation energy in the molecule is dissociated is represented by the following formula (2) :

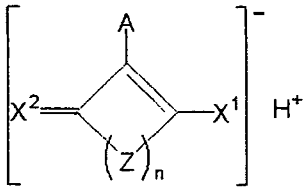 (2)

wherein $X^1$, $X^2$, Z, n and A are the same as defined above;

[3] the electrolyte described in any one of [1] or [2], characterized by containing the oxocarbon molecule having a difference in heat of formation ΔE of

$$\Delta E < -75 \text{ (kcal/mol)};$$

[4] the electrolyte described in any one of [1] to [3], which is characterized in that Z is -CO-, -C(S)- or -C(NH)-;

[5] the electrolyte described in any one of [1] to [4], which is characterized in that $X^1$ and $X^2$ are -O-, Z is -CO-, and n is an integer of 0 to 2;

[6] a polymer electrolyte characterized by containing the electrolyte described in any one of the above-mentioned [1] to [5] as an effective component;

[7] a polymer electrolyte membrane characterized by containing the polymer electrolyte described in the above-mentioned [6];

[8] a cell characterized by containing at least one of the polymer electrolyte described in the above-mentioned [6] and polymer electrolyte membrane described in the above-mentioned [7]; and

[9] a fuel cell characterized by containing at least one of the polymer electrolyte described in the above-mentioned [6] and the polymer electrolyte membrane described in the above-mentioned [7].

BEST MODE FOR CARRYING OUT THE INVENTION

The present invention will be described in detail.

The electrolyte of the present invention is characterized by comprising an oxocarbon molecule which has a difference in heat of formation ΔE defined as:

$$\Delta E = E_2 - E_1 \text{ (kcal/mol)}$$

satisfying the range of

$$\Delta E < -70 \text{ (kcal/mol)},$$

wherein $E_1$ (kcal/mol) is a heat of formation in the state where hydrogen ion is non-dissociated, and $E_2$ (kcal/mol) is a heat of formation in the state where hydrogen ion having the lowest dissociation energy in the molecule is dissociated, both being calculated in regard to the stabilized molecular structure in accordance with a molecular orbital method.

In the present invention, the above-mentioned heat of formations $E_1$ (kcal/mol) and $E_2$ (kcal/mol) are calculated by using MOPAC 2002 Ver 1.00 (made by Fujitsu Limited), which is a molecular orbital program, and a keyword of PM5 EF PRECISE; and the state where hydrogen ion is dissociated is calculated by further using an additional keyword of CHARGE=-1.

Preferably, the electrolyte of the present invention includes the oxocarbon molecule having the specific range of the ΔE as described above, and the oxocarbon molecule in the state where hydrogen ion is non-dissociated is, in a free acid form, represented by the following formula (1):

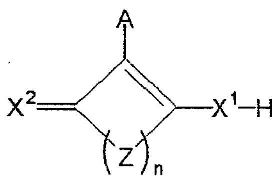

(1)

wherein $X^1$ and $X^2$ are each independently -O-, -S- or -NR-; Z is -CO-, -C(S)-, -C(NR')-, an alkylene group that may have a substituent or an arylene group that may have a substituent, in which R and R' are each independently hydrogen atom, an alkyl group having 1 to 6 carbon atoms that may have a substituent, or an aryl group having 6 to 10 carbon atoms that may have a substituent; n is the number of repeating units of an integer of 0 to 10; n pieces of Z may be the same as or different to each other; and A is a monovalent hydrocarbon group.

Also, as the oxocarbonmolecule included in the electrolyte of the present invention, the oxocarbon molecule in the state where hydrogen ion having the lowest dissociation energy in the molecule is dissociated is preferably represented by the following formula (2):

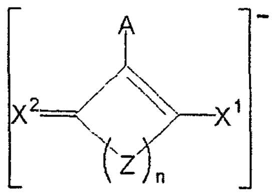

(2)

wherein $X^1$, $X^2$, Z, n and A are the same as defined above.

Here, the state where the hydrogen ion is dissociated means a state where the hydrogen ion is kept away from an anion at an infinite distance.

In the above-mentioned formula, $X^1$ and $X^2$ are each independently -O-, -S- or -NR-. R is hydrogen atom; an alkyl group having 1 to 6 carbon atoms that may have a substituent, typified by methyl group, trifluoromethyl group, ethyl group, propyl group, isopropyl group, n-butyl group, and the like, or an aryl group having 6 to 10 carbon atoms that may have a substituent, typified by phenyl group, pentafluorophenyl group, naphthyl group, and the like. A hydrogen atom is preferable as R. $X^1$ and $X^2$ are preferably -O- or -S-, and particularly preferably -O-.

Also, Z is -CO-, -C (S) -, -C (NR') -, an alkylene group having 1 to 6 carbon atoms that may have a substituent, or an arylene group having 6 to 10 carbon atoms that may have a substituent. R' is hydrogen atom; an alkyl group having 1 to 6 carbon atoms that may have a substituent, typified by methyl group, trifluoromethyl group, ethyl group, propyl group, isopropyl group, n-butyl group, and the like or an substituted having 6 to 10 carbon atoms that may have a substituent, typified by phenyl group, pentafluorophenyl group, naphthyl group, and the like. A hydrogen atom is preferable as R'.

Here, the alkylene groups having 1 to 6 carbon atoms include, for example, methylene, ethylene, propylene, i-propylene, butylene, penthylene, and the like. The arylene groups having 6 to 10 carbon atoms include, for example, phenylene, naphthylene, and the like. In case of having a substituent, the substituents include, for example, halogen

atoms such as fluorine, chlorine and bromine and, of these, fluorine is preferably used.

Z is preferably -CO-, -C(S)-, -C (NR') -, methylene, difluoromethylene, phenylene, tetorafluorophenylene or the like, more preferably -CO-, -C(S)-, particularly preferably -CO-.

The letter n, the number of repeating units Z, is an integer of 0 to 10; and n pieces of Z may be the same as or different from each other. Preferably, n is an integer of 0 to 4, more preferably an integer of 0 to 2, particularly preferably 1. A is a monovalent group, and represents, for example, -OH, -SH, $-NH_2$, a halogen atom, or a monovalent hydrocarbon group, and is preferably a monovalent hydrocarbon group. The monovalent hydrocarbon group may be a hydrocarbon group having a formula weight of less than 5000 such as an alkyl group having 1 to 18 carbon atoms that may have a substituent, an aryl group having 6 to 18 carbon atoms that may have a substituent, and an aralkyl group having 7 to 16 carbon atoms that may have a substituent, and may also be a monovalent group having a formula weight of 5000 or more.

Examples of the monovalent group having a formula weight of 5000 or more include groups in the form wherein a hydrogen atom is pulled out of at least one polymer selected from the group consisting of vinyl polymers, polyoxyalkylenes, polysiloxanes, polyesters, polyimides, polyamides, polybenzoxazoles, polybenzimidazoles, polyarylene ethers, polyarylenes, polyarylene sulfides, polyether ketones, polyether sulfones, polyphosphazenes and their copolymers. Also, 2 or more of the oxocarbon groups, that is, groups in which A is removed from the group represented by the general formula (1), may exist in one molecule.

Here, the alkyl groups having 1 to 18 carbon atoms may include, for example, methyl, ethyl, propyl, i-propyl, n-butyl, sec-butyl, isobutyl, t-butyl, pentyl, hexyl, heptyl, octyl, nonyl, decyl, undecyl, dodecyl, tridecyl, tetoradecyl, pentadecyl, hexadecyl, heptadecyl, octadecyl, and the like.

When an alkyl group having 1 to 18 carbon atoms is substituted, the substituents may include, for example, halogens such as fluorine, chlorine and bromine, nitro, cyano, alkoxyls having 1 to 5 carbon atoms such as methoxy, ethoxy and propoxy; fluoroalkyls having 1 to 5 carbon atoms such as trifluoromethyl and pentafluoromethyl; and the like.

An aryl groups having 6 to 18 carbon atoms may include, for example, phenyl, naphthyl, anthranil, and the like. When the aryl group having 6 to 18 carbon atoms is substituted, the substituents may include, for example, halogen atoms such as fluorine atom, chlorine atom and bromine atom; nitro; cyano; alkoxyls having 1 to 5 carbon atoms such as methoxy, ethoxy and propoxy; fluoroalkyls having 1 to 5 carbon atoms such as trifluoromethyl and pentafluoromethyl; alkyls having 1 to 5 carbon atoms such as methyl, ethyl, propyl or butyl; and the like.

The aralkyl groups having 7 to 16 carbon atoms may include, for example, benzyl, phenylethyl, phenylpropyl, naphthylmethyl, naphthylethyl, and the like. When the aralkyl groups having 7 to 16 carbon atoms has a substituent, the substituents may include, for example, halogen atoms such as fluorine atom, chlorine atom and bromine atom; nitro; cyano; alkoxyls having 1 to 5 carbon atoms such as methoxy, ethoxy and propoxy; fluoroalkyls having 1 to 5 carbon atoms such as trifluoromethyl and pentafluoromethyl; alkyls having 1 to 5 carbon atoms such as methyl, ethyl, propyl or butyl; and the like.

A preferably is an alkyl group having 1 to 18 carbon atoms that may have a substituent, an aryl group having 6 to 18 carbon atoms that may have a substituent and an aralkyl group 7 to 16 carbon atom that may have a substituent, more preferably methyl group, ethyl group, trifluoromethyl group, phenyl group, naphthyl group, fluorophenyl group, pentafluorophenyl group and benzyl group, further more preferably trifluoromethyl group, fluorophenyl group and pentafluorophenyl group, and particularly preferably fluorophenyl group and pentafluorophenyl group.

Although the formula (1) is described in a free acid form, the hydrogen atom described therein may be substituted by a monovalent metal ion. The monovalent metal ions may include lithium ion, sodium ion, potassium ion and cesium ion.

When the electrolyte of the present invention is used as a proton conductive membrane for a fuel cell, the oxocarbon molecule is preferably used in a free acid form; and when the electrolyte of the present invention is used as an electrolyte for a lithium secondary battery, the oxocarbon molecule is preferably used in a form wherein the hydrogen atom is substituted by lithium ion.

Specific examples of the oxocarbon molecule (1) in the present invention may include the following compounds.

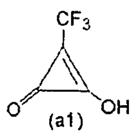
(a1)
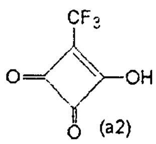
(a2)
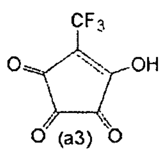
(a3)
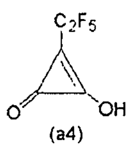
(a4)
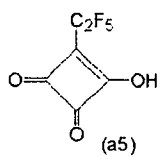
(a5)
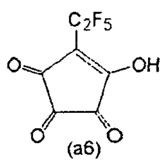
(a6)

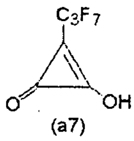
(a7)
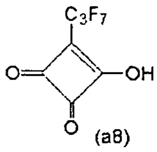
(a8)
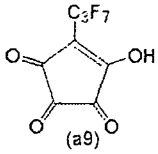
(a9)
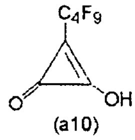
(a10)
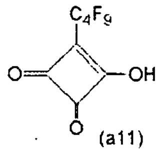
(a11)
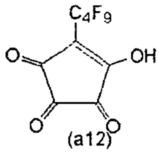
(a12)

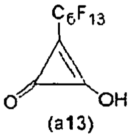
(a13)
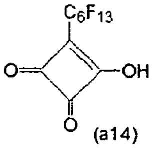
(a14)
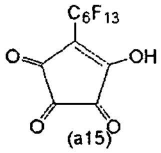
(a15)
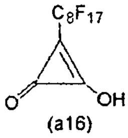
(a16)
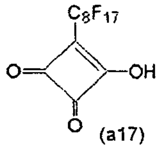
(a17)
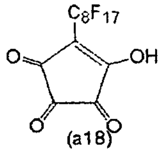
(a18)

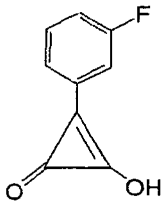
(a19-m)
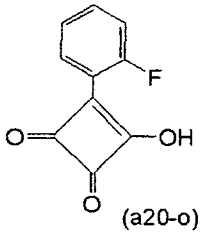
(a20-o)
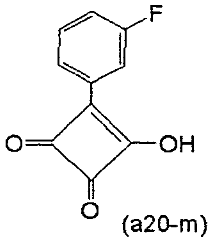
(a20-m)
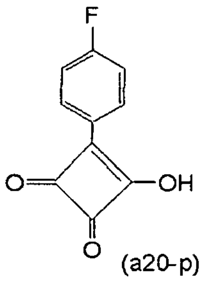
(a20-p)

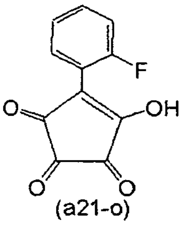
(a21-o)
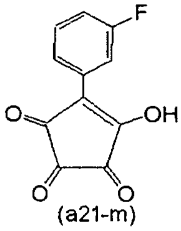
(a21-m)
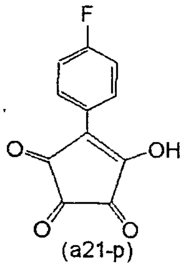
(a21-p)
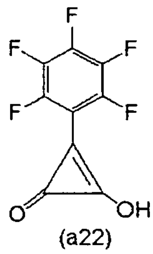
(a22)
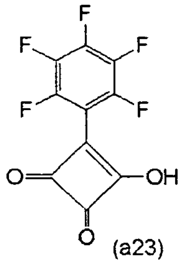
(a23)
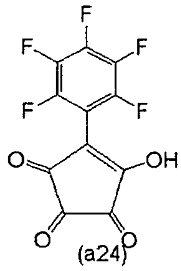
(a24)

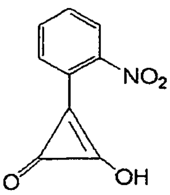
(a25-o)
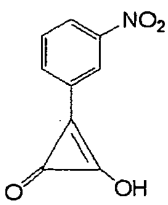
(a25-m)
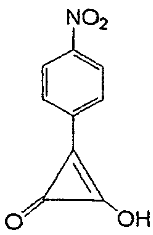
(a25-p)
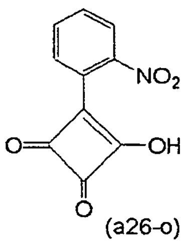
(a26-o)
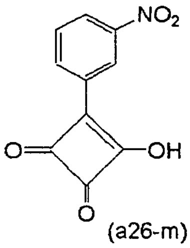
(a26-m)
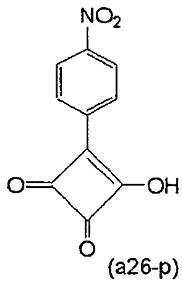
(a26-p)

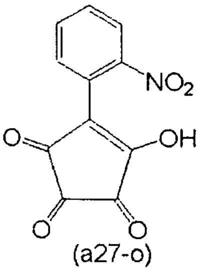
(a27-o)

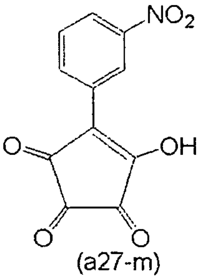
(a27-m)

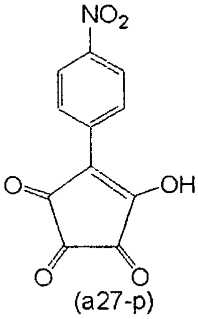
(a27-p)

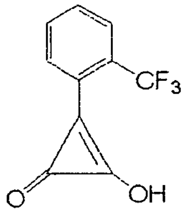
(a28-o)

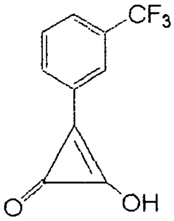
(a28-m)

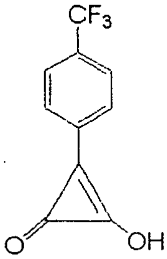
(a28-p)

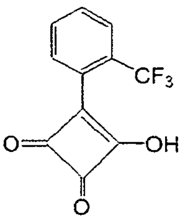
(a29-o)

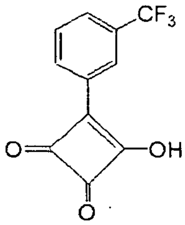
(a29-m)

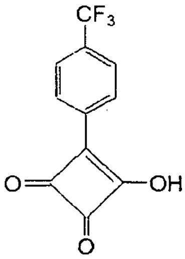
(a29-p)

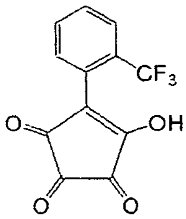
(a30-o)

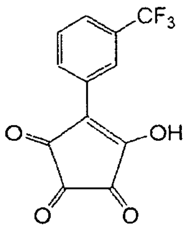
(a30-m)

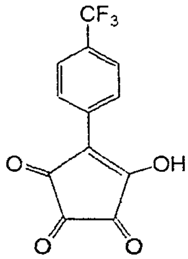
(a30-p)

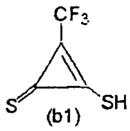
(b1)

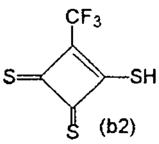
(b2)

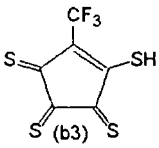
(b3)

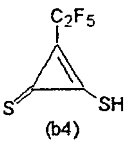
(b4)

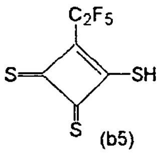
(b5)

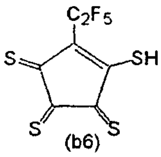
(b6)

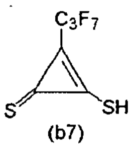
(b7)

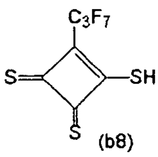
(b8)

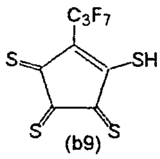
(b9)

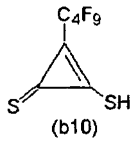
(b10)

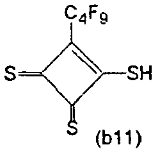
(b11)

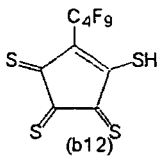
(b12)

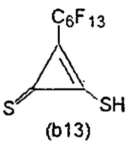
(b13)

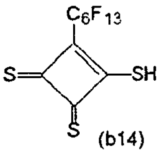
(b14)

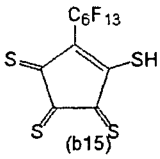
(b15)

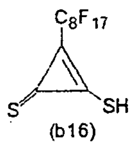
(b16)

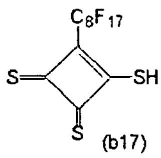
(b17)

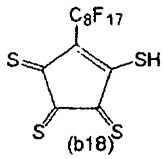
(b18)

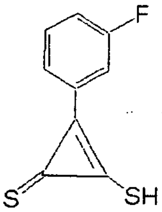
(b19-m)

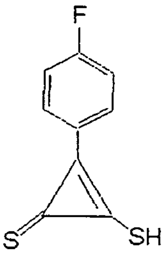
(b19-p)

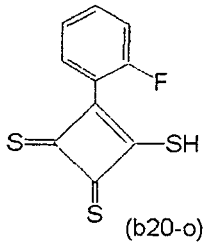
(b20-o)

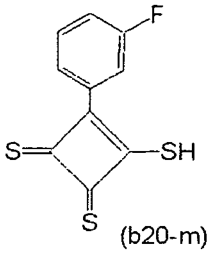
(b20-m)

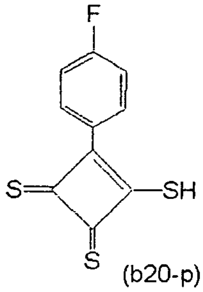
(b20-p)

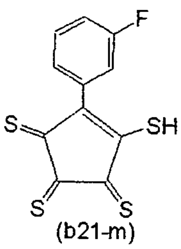
(b21-m)

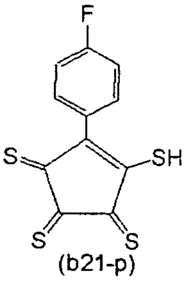
(b21-p)

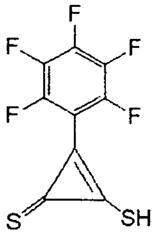
(b22)

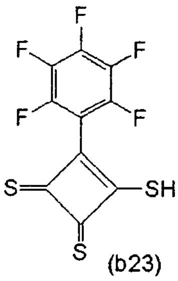
(b23)

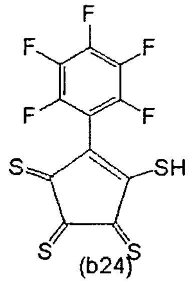
(b24)

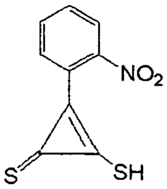
(b25-o)

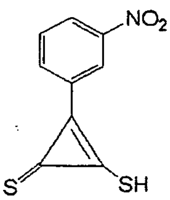
(b25-m)

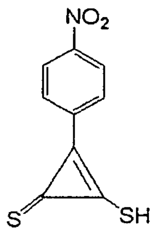
(b25-p)

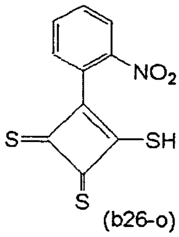
(b26-o)

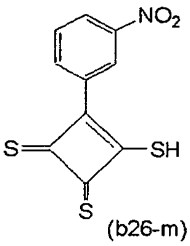
(b26-m)

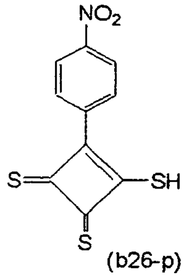
(b26-p)

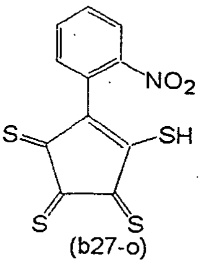
(b27-o)

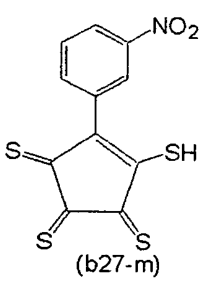
(b27-m)

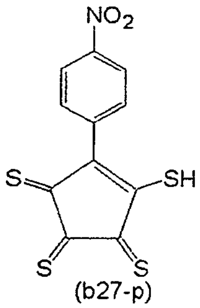
(b27-p)

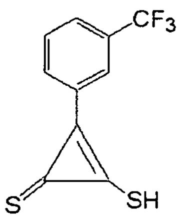
(b28-m)

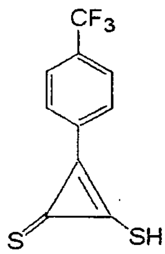
(b28-p)

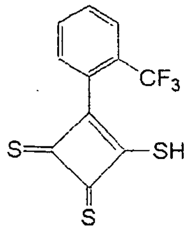
(b29-o)

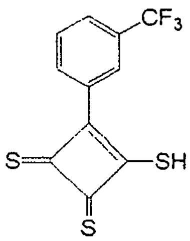
(b29-m)

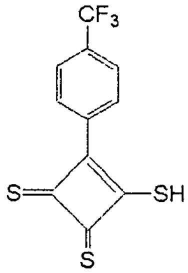
(b29-p)

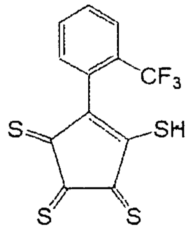
(b30-o)

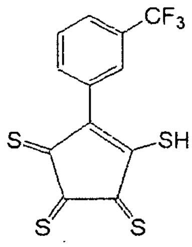
(b30-m)

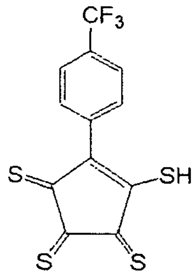
(b30-p)

| Oxocarbon molecule | Difference in heat of formation ΔE (kcal/mol) |
|---|---|
| a1 | -82.2 |
| a2 | -88.1 |
| a3 | -91.6 |
| a4 | -85.9 |
| a5 | -91.8 |
| a6 | -95.0 |
| a7 | -87.7 |
| a8 | -93.5 |
| a9 | -96.8 |
| a10 | -88.9 |
| a11 | -94.4 |
| a12 | -97.7 |
| a13 | -89.6 |
| a14 | -95.4 |
| a15 | -98.0 |
| a16 | -90.5 |
| a17 | -95.9 |
| a18 | -98.5 |
| a19-m | -70.0 |
| a20-o | -72.0 |
| a20-m | -78.8 |
| a20-p | -78.6 |
| a21-o | -75.8 |
| a21-m | -79.6 |
| a21-p | -80.0 |
| a22 | -82.0 |
| a23 | -89.9 |
| a24 | -91.4 |
| a25-o | -71.3 |

(continued)

| Oxocarbon molecule | Difference in heat of formation ΔE (kcal/mol) |
|---|---|
| a25-m | -75.1 |
| a25-p | -80.2 |
| a26-o | -79.7 |
| a26-m | -83.4 |
| a26-p | -88.4 |
| a27-o | -82.4 |
| a27-m | -85.1 |
| a27-p | -88.6 |
| a28-o | -70.6 |
| a28-m | -73.2 |
| a28-p | -75.7 |
| a29-o | -79.0 |
| a29-m | -81.8 |
| a29-p | -84.4 |
| a30-o | -79.0 |
| a30-m | -83.3 |
| a30-p | -85.1 |

| Oxocarbon molecule | Difference in heat of formation ΔE (kcal/mol) |
|---|---|
| b1 | -81.0 |
| b2 | -81.9 |
| b3 | -80.6 |
| b4 | -83.5 |
| b5 | -84.6 |
| b6 | -83.5 |
| b7 | -84.8 |
| b8 | -86.0 |
| b9 | -84.8 |
| b10 | -85.6 |
| b11 | -86.8 |
| b12 | -85.7 |
| b13 | -86.5 |
| b14 | -87.7 |
| b15 | -86.6 |
| b16 | -86.8 |
| b17 | -88.1 |
| b18 | -87.0 |

(continued)

| Oxocarbon molecule | Difference in heat of formation ΔE (kcal/mol) |
|---|---|
| b19-m | -70.4 |
| b19-p | -70.4 |
| b20-o | -70.0 |
| b20-m | -75.1 |
| b20-p | -75.3 |
| b21-m | -71.9 |
| b21-p | -72.3 |
| b22 | -79.2 |
| b23 | -81.7 |
| b24 | -80.8 |
| b25-o | -71.3 |
| b25-m | -74.5 |
| b25-p | -78.2 |
| b26-o | -74.8 |
| b26-m | -79.2 |
| b26-p | -82.9 |
| b27-o | -72.3 |
| b27-m | -76.7 |
| b27-p | -79.1 |
| b28-m | -73.1 |
| b28-p | -75.1 |
| b29-o | -73.3 |
| b29-m | -77.9 |
| b29-p | -79.8 |
| b30-o | -72.0 |
| b30-m | -75.0 |
| b30-p | -76.3 |

In the present invention, the oxocarbon molecules as described above are used. With respect to the difference in heat of formation ΔE, it is preferable that ΔE satisfies <-72 (kcal/mol), more preferably ΔE satisfies <-74 (kcal/mol), particularly preferably ΔE satisfies <-75 (kcal/mol), most preferably ΔE satisfies <-78 (kcal/mol).

On the other hand, from the viewpoint of the production of the oxocarbon molecule, (a1) to (a30) are preferable, (a2), (a5) (a8), (a11), (a14), (a17), (a20-o), (a20-m), (a20-p), (a23), (a26-o), (a26-m), (a26-p), (a29-o), (a29-m) and (a29-p) are more preferable, (a2), (a5), (a8), (a11), (a14), (a17), (a20-o), (a20-m), (a20-p) and (a23) are further more preferable, and(a20-m), (a20-p) and (a23) are particularly preferable.

The oxocarbon molecule can be produced according to the following method. It may also be obtained from reagent makers.

(I) A method for producing compounds which are oxocarbons (1), wherein R is an alkyl or aryl, using a lithium reagent (Journal of Organic Chemistry, 53, 2482, 2477(1988)).

(II) A method for producing compounds which are oxocarbons (1) wherein R is an alkyl or aryl, using a Grignard reagent (Heterocycles, 27(5), 1191 (1988)).

(III) A method for producing compounds which are oxocarbons (1) wherein R is an alkyl or aryl, using a tin reagent (Journal of Organic Chemistry, 55, 5359 (1990), TetrahydronLetters, 31 (30), 4293 (1990)).
(IV) A method for producing compounds by a Friedel Crafts reaction (Synthesis, p. 46 (1974)).

Various derivatives can be produced according to these methods. When ester forms are obtained by the methods (I) to (IV), the esters can be hydrolyzed with an acid or an alkali to give oxocarbon molecules having the formula (1). Although the formula (1) is described in a free acid form, when the hydrogen atom in the formula (1) is substituted by a monovalent metal ion, the oxocarbon molecule in a free acid form as described in the formula (1) can be obtained by neutralizing with a solution including an alkali metal hydroxide.

The reagents used in the treatment under acidic conditions mayincludehydrochloricacid, sulfuricacid, nitricacid, acetic acid, trifluoroacetic acid, formic acid, oxalic acid, mixture thereof, and the like. The treating temperature is generally from -150°C to 200°C, preferably from -100°C to 150°C, more preferably from -80°C to 120°C. The treating time is generally from 10 minutes to 20 hours, preferably from 30 minutes to 15 hours, particularly preferably from 1 hour to 10 hours. When the treatment is performed under an acidic condition, it may be either in a homogeneous system or in a heterogeneous system.

The electrolyte of the present invention is characterized by containing the above-mentioned oxocarbon molecule, and the oxocarbon molecule may be used, as an electrolyte, alone or it may contain other components.

Other components may include low molecular weight compounds such as alcohols, ketones, ethers, halogenated hydrocarbon compounds, sulfoxides, sulfones, amide, aliphatic hydrocarbons, aromatic hydrocarbons, carbonic acid esters, esters, nitrile, oligo alkylene glycols, mixtures thereof, and compounds in which a fluorine substituent is introduced therein; and high molecular weight compounds such as vinyl polymers typified by polyvinyl pyrrolidones, poly (meth)acrylic acids, poly(meth)acrylic acid esters, poly(meth)acrylonitriles, polystyrenes, polyvinyl pyridines, polyethylenes, polypropylenes, polybutenes, polyvinylidene fluorides, polytetorafluoroethylenes and polyvinyl chloride, polyoxyalkylenes, polysiloxanes, polyesters, polyimides, polyamides, polybenzoxazoles, polybenzimidazoles, polyarylene ethers, polyarylenes, polyarylene sulf ides, polyether ketones, polyether sulfones, polyphosphazenes, copolymers thereof, and mixtures thereof.

The lowmolecular weight compounds in the present invention refer to compounds having a number average molecular weight of 1000 or less, and the alcohols may include methanol, ethanol, isopropanol, butanol, and the like; the ketones may include acetone, methyl isobutyl ketone, methyl ethyl ketone, benzophenone, and the like. The ethers may include diethyl ether, dibutyl ether, diphenyl ether, tetrahydrofuran (hereinafter referred to as "THF"), dioxane, dioxolane, ethylene glycol monomethyl ether, ethylene glycol monoethyl ether, propylene glycol monomethyl ether, propylene glycol monoethyl ether, and the like.

The halogenated hydrocarbon compounds may include chloroform, dichloromethane, 1,2-dichloroethane, 1, 1, 2, 2-tetrachloroethane, chlorobenzene, dichlorobenzene, and the like; and the sulfoxides may include dimethyl sulfoxide (hereinafter referred to as "DMSO"). The sulfones may include diphenyl sulfone, sulpholane, and the like; and the amides may include N,N-dimethylacetoamide (hereinafter referred to as "DMAc"), N-methyl acetamide, N,N-dimethylformamide (hereinafter referred to as "DMF"), N-methylformamide, formamide, N-methyl pyrrolidone (hereinafeter referred to as "NMP"), and the like. The aliphatic hydrocarbons may include pentane, hexane, heptane, octane, and the like; and the aromatic hydrocarbons may include benzene, toluene, xylene, and the like.

The carbonic acid esters may include propylene carbonate, ethylene carbonate, dimethyl carbonate, diethyl carbonate, ethyl methyl carbonate, 4-trifluoromethyl-1,3-dioxolane-2-on, 1,2-di(methoxycarbonyloxy) ethane, and the like; the esters may include methyl formate, methyl acetate, γ-butyrolactone, and the like; the nitriles may include acetonitrile, butyronitrile, and the like; and the oligo alkylene glycols may include oligo(ethylene glycol), oligo(propylene glycol), oligo(butylene glycol), and the like.

When the electrolyte of the present invention is used as an electrolyte in a lithium secondary battery, an aprotonic solvent is mainly used as the low molecular weight compound. Such low molecular weight compounds may include, for example, carbonic acid esters, ethers, esters, nitriles, amides, sulfoxides, sulfones, mixtures thereof, compounds in which a fluorine substituent is further introduced therein. Of these, carbonic acid esters, ethers, esters, the mixtures thereof, and the compounds in which a fluorine substituent is further introduced therein are preferable.

From the viewpoint of solubility and ion conductivity of the oxocarbon molecule, it is preferable that the low molecular weight compound contains a high dielectric constant component having a conductivity of 20 or more in a proportion of 20% by weight or more based on the total weight of the low molecular weight compound. A conductivity of 30 ormore is more preferable, 40 or more is further more preferable, and 50 or more is particularly preferable. The high dielectric constant component is contained more preferably in a proportion of 30% by weight or more, further more preferably 40% by weight or more, particularly preferably 50% by weight or more, based on the total weight of the low molecular weight compound.

From the above-mentionedviewpoints, it is preferable that the low molecular weight compounds used in the electrolytes of the present invention include cyclic carbonic acid esters, which are known to have high conductivities.

The carbonic acid esters are preferably contained in a proportion of 20% by weight or more, more preferably 30% by weight or more, further more preferably 40% by weight or more, particularly preferably 50% by weight or more, based on the weight of the low molecular weight compound. Particularly preferable cyclic carbonic acid esters are propylene carbonate, propylene carbonate, and mixtures thereof.

A low molecular weight composition containing the low molecular weight compound and the above-mentioned oxocarbon molecule has a value of [amount (mmol) of the oxocarbon] / [weight (g) of the low molecular weight electrolyte + weight (g) of the oxocarbon molecule)], that is, an equivalent of the oxocarbon molecule in the low molecular weight composition, of generally 0.05 to 8 mmol/g, preferably 0.1 to 7 mmol/g, more preferably 0.3 to 6 mmol/g, most preferably 0.5 to 5 mmol/g.

When the equivalent of the oxocarbon molecule in the low molecular weight composition is less than 0 . 05 mmol/g, then the ion conductivity tends to lower, which is not preferable in a power generation characteristics, and when it is more than 8 mmol/g, then it tends to deposit a component incapable of dissolving in a solvent.

The oxocarbon molecule is usually used such that the equivalent of the oxocarbon molecule in the electrolyte of the low molecular weight composition is within the above-mentioned range. In the present invention, the equivalents of the oxocarbons in the low molecular weight compositions are measured by means of an NMR method.

The electrolyte of the present invention can be produced by mixing the oxocarbon molecule with the low molecular weight compound. The mixing may be performed at room temperature or with heating at a temperature of the boiling temperature of the low molecular weight compound or less. The heating temperature is preferably 150°C or less, and more preferably 100°C or less.

The electrolyte containing the oxocarbon molecule and the low molecular weight compound can be produced as shown above.

The preferable high molecular weight compounds include polyvinyl pyrrolidone, poly(meth)acrylic acid, polyvinyl pyridine, polyvinylidene fluoride, polyimide, polybenzoxazole, polybenzimidazole, polyarylene ethers, polyarylene, polyether ketones, polyether sulfones, copolymers thereof, mixture thereof, and the like, more preferably, polyvinyl pyrrolidone, polyvinyl pyridine, polybenzimidazole, polyether sulfone, copolymers thereof, the mixtures thereof, and the like.

In the present invention, the high molecular weight compound has a number average molecular weight of 1000 or more, usually about 1000 to 2000000, preferably about 2000 to 1000000. When the electrolyte is used in the shape of a membrane is employed, the number average molecular weight is preferably from about 5000 to 1000000. When the molecular weight is less than 5000, then it tends to be difficult to maintain the shape of a membrane upon using the membrane; and when it is more than 1000000, the formation into a membrane tends to be difficult.

The high molecular weight composition containing the high molecular weight compound and the above-mentioned oxocarbon molecule has a value of [amount (mmol) of the oxocarbons] / [weight (g) of the high molecular weight compound + weight (g) of the oxocarbon molecule], that is, an equivalent of the oxocarbon molecule in the high molecular weight composition of preferably from 0.05 to 8 mmol/g, more preferably from 0.1 to 7 mmol/g, further more preferably from 0.3 to 6 mmol/g, particularly preferably from 0.5 to 5 mmol/g.

When the equivalent of the oxocarbon molecule in the high molecular weight composition is0.05 mmol/g or more, then preferably, the ion conductivity tends to be further improved, and when it is 8 mmol/g or less, then water resistance tends to be better.

The oxocarbon molecule is usually used such that an ion exchange equivalent of the high molecular weight composition is within the above-mentioned range. In the present invention, the equivalent of the oxocarbon molecule in the high molecular weight composition is measured by means of an NMR method.

Such a high molecular weight composition is characterized by containing the high molecular weight compound and the oxocarbon molecule, and the productions thereof are not particularly limited. For example, a method in which the high molecular weight compound and the oxocarbon molecule are dissolved, dispersed or suspended in a solvent, following by the removal of the solvent; a method in which a high molecular weight compound is obtained in the presence of the oxocarbon molecule, and the like can be listed.

The solvents used in the former method may be suitably selected from, for example, water, alcohol solvents, ketone solvents, ether solvents, halogen solvents, sulfoxide solvents, sulfone solvents, amide solvents, aliphatic hydrocarbon solvents, aromatic hydrocarbon solvents, mixed solvents thereof, and the like. Examples of these solvents are the same as above.

As a method for removing the solvent, a method in which the solvent in the mixed solution, dispersion or suspension containing the solvent is evaporated to distill away can be listed. It is also possible to form into a membrane by using a solvent cast method as mentioned below.

As the method in which the high molecular weight compound is produced in the presence of the oxocarbon molecule to give a high molecular weight composition, a method in which a high molecular weight composition is obtained at the same time as a known polymerization method such as radical polymerization, cationic polymerization, anionic polymerization, ionic polymerization using a Zieglar-Natta catalyst, ring-opening polymerization, elimination polymerization, addition polymerization, polycondensation, addition condensation, and the like is performed in the presence of

the oxocarbon molecule to give a high molecular weight compound ("Experimental Method of Polymer Synthesis" Kagaku-Dojin Publishing Company, Inc, pp 125 - 357 (1972)). When a side reaction, such as an inhibition reaction of the polymerization of the oxocarbon molecule, can occur during the polymerization reaction, for example when an anionic polymerization is performed in the presence of an oxocarbon molecule having a hydroxyl group, the oxocarbon molecule in which the hydroxyl group is protected by a known protection method using, for example, an alkoxyl group, siloxy group, ester group, and the like can be used. In this case, the protective group is removed by a known method after the polymerization to give a desired product.

Next, the case where the electrolytes of the present invention are used as materials of barrier membranes in electrochemical devices such as fuel cells will be described.

In this case, the electrolyte of the present invention is used alone or as a suitable high molecular weight composition in the state of a film. Methods for transforming a film are not particularly limited, and, for example, a method in which a membrane is made from a state of a solution (solvent cast method) is preferably used.

Specifically, the electrolyte of the present invention or the high molecular weight composition is dissolved in an appropriate solvent, the resulting solution is coated on a glass plate, and the solvent is removed therefrom to prepare a membrane . The solvents used in the membrane production are not particularly limited so long as they are capable of dissolving the high molecular weight molecule and being removed therefrom; and aprotonic polar solvents such as DMF, DMAc, NMP, DMSO; chlorinated hydrocarbon compound solvents such as dichloromethane, chloroform, 1,2-dichloroethane, chlorobenzene and dichlorobenzene; alcohols such as methanol, ethanol and propanol; alkylene glycol monoalkyl ethers such as ethylene glycol monomethyl ether, ethylene glycol monoethyl ether, propylene glycol monomethyl ether and propylene glycol monoethyl ether; and ether solvents such as THF, 1, 3-dioxolane, 1,4-dioxane, 1,3-dioxane, tetrahydropyran, dibutyl ether, tert-butyl methyl ether, diphenyl ether and crown ethers are preferably used. They may be used alone or as a mixture of two or more solvents according to need.

Of these, DMSO, DMF, DMAc, NMP, THF, 1,3-dioxolane are preferable because of the high solubility to the high molecular weight molecules.

The thickness of the film is not particularly limited, and it is preferably from 10 to 300 μm, particularly preferably from 20 to 100 μm. Films having a thickness of less than 10 μm can have sometimes a strength insufficient in practical use, and films having a thickness of more than 300 μm tends to have too high membrane resistance, thus resulting in lowering of the properties of electrochemical devices. The membrane thickness can be adjusted by controlling the concentration of the solution and the thickness of the film coated on a substrate.

Also, in order to improve various physical properties of the film, plasticizers, stabilizers and releasing agents, which are used in general polymers, can be contained in the high molecular weight molecules. Further, the molecule can be complexed with another polymer by a method such as mixing them in the same solvent and co-casting it to give an alloy.

In addition, in the use of fuel cell, it is also known to add inorganic or organic fine particles as a humectant, for making a water management easier. All of these known methods can be used in the present invention so long as they are not contrary to the purpose of the present invention.

In order to improve the mechanical strength of the films, and the like, cross-linkages can be formed by irradiating electron beam or radial rays (for example, Japanese Patent Application Laid-Open Publication No. 11-111310). Further, a method in which impregnation in a porous film or sheet is performed to complex therewith (Japanese Patent Application Laid-Open Publication No.6-29032), a method for reinforcing the film by mixing a fiber or pulp, and the like are known. These known methods can be used so long as they are not contrary to the purpose of the present invention.

Next, the fuel cells of the present invention will be described.

The fuel cells of the present invention can be produced by connecting a catalyst and a conductive material as a collector on the both sides of a film.

Known catalysts can be used without any particular limitations so long as they can activate the oxidation-reduction reaction with hydrogen or oxygen, and it is preferable to use fine platinum particles.

The fine platinum particles which are supported on a particulate activated carbon or graphite or a fibrous carbon are often and preferably used.

Known conductive materials can be used as a collector, and a porous carbon woven cloth, a carbon non-woven cloth and a carbon paper are preferable, because they transport effectively a source gas to the catalyst.

As the methods for connecting the fine platinum particles or the carbon supporting the fine platinum particles with the porous carbon non-woven cloth or the carbon paper, and the method for connecting it with a polymer electrolyte film, known methods such as a method described in J. Electrochem. Soc.: Electrochemical Science and Technology, 1988, 135 (9), 2209 can be used.

The high molecular weight composition in the present invention can be used as one component of a catalyst composition forming a catalyst layer of a solid polymer fuel cell.

The thus produced fuel cells of the present invention can be used in various systems using, as a fuel, hydrogengas, reformed hydrogen gas, methanol, dimethyl ether, and the like.

EXAMPLES

The present invention will be described in more detail by means of Examples, but the present invention is not limited thereto.

The proton conductivity (σ) were measured as follows:

Platinumplates (width: 5.0mm) were pressed on the surface of a strip membrane sample having a width of 1.0 cm so that a distance is 1.0 cm, the sample was put in a constant temperature and moisture chamber having a temperature of 80°C and a relative humidity of 100%, and alternating current impedances were measured at $10^6$ to $10^{-1}$ Hz between the platinum plates, and σ was calculated by using the following formula:

$$\sigma\ (S/cm) = 1/(R \times d)$$

wherein R (Ω) is a real component of a complex impedance when an imaginary component of the complex impedance is 0 on a Cole-Cole plot, and d is a thickness (cm) of a membrane.

(Example 1)

Production of 4-(4-fluorophenyl)-3-hydroxy-cyclobutene-3-en-1,2-dione (IV) and a composition tereof

In accordance with a method described in Journal of Organic Chemistry, 1990, 55, 5359, 4-(1-methylethoxy)-3-(tri-n-butylstannyl)cyclobutene-3-en-1 ,2-dione (II) was produced.

Next, to a flask substituted by an inert gas were added copper iodide (I) 92.0 mg (0.49 mmol), parafluoroiodobenzene 1. 17 g (5.24 mmol), $(C_6H_5CH_2)ClPd(PPh_3)_2$ 0.22 g (0.29 mmol), which were dissolved in DMF 6.0 ml, followed by addition dropwise of 2.00 g (4.8 mmol) of (II) synthesized above. After stirring the mixture for 4 hours, the reaction mixture was diluted with diethyl ether 50 ml, and washed with a saturated aqueous ammonium chloride solution (50 ml) once and a 10 wt% aqueous potassium fluoride solution (50 ml) three times. The ether and DMF were distilled away, and the resulting crude product was purified by a column chromatographyusing silica gel as a filler and hexane : ether = 3:1 (vol/vol) as an eluting solvent to give 0.55 g of 4-(4-fluorophenyl)-3-(1-methylethoxy)-cyclobutene-3-en-1,2-dione (III).

Next, (III) 0.37 g (1.26 mmol) was dissolved in THF 0.1 ml, to which 12 N of hydrochloric acid 7.0 ml was added, and the mixture was stirred for 3 hours. After that, the reaction mixture was diluted with water 10 ml, and washed with $CH_2Cl_2$ (10 ml) once. Water in the aqueous layer was distilled away to give 4-(4-fluorophenyl)-3-hydroxy-cyclobutene-3-en-1,2-dione (IV) 0.179 g. The structure was confirmed by using $^1$H NMR and $^{19}$F NMR. The purity was confirmed by using HPLC and was 99% or more.

Next, in a vessel having an internal volume of 20 ml were put poly(N-vinylpyrrolidone) (made by Aldrich, hereinafter abbreviated as "PVP") 41.0 mg, (III) synthesized above 17.7 mg (0.0921 mmol) and ion-exchanged water 3.0 ml, which was stirred at room temperature for 30 minutes to give a homogeneous solution.

The solution was spread in a petri dish, and water was distilled away at 80°C to give a membrane (f) having a thickness of 145 μm. The proton conductivity of (f) is shown in Table 1.

The difference in heat of formation ΔE of (f) was -78.6 kcal/mol.

(Example 2)

Production of 3-hydroxy-4-(2,3,4,5,6-pentafluorophenyl)-cyclobutene-3-en-1,2-dione (VI) and a composition thereof

To a flask substituted by an inert gas were added copper iodide (I) 18.0 mg (0.095 mmol),parafluoroiodobenzene 0.30 g (1.00 mmol) and $(C_6H_5CH_2)ClPd(PPh_3)_2$ 43.0 mg (0.057 mmol), which was dissolved in DMF 1.0ml, followed by addition dropwise of (II) 0. 40g (0. 93 mmol) . After stirring the mixture for 4 hours, the reaction mixture was diluted with diethyl ether 50 ml, and washed with a saturated aqueous ammonium chloride solution (50 ml) once and a 10 wt% aqueous potassium fluoride solution (50 ml) three times. The ether and DMF were distilled away, and the resulting crude product was purified by a column chromatography using silica gel as a filler and hexane : ether = 3:1 (vol/vol) as an eluting solvent to give 0.053 g of 4-(2,3,4,5,6-pentafluorophenyl)-3-(1-methylethoxy)-cyclobut ene-3-en-1,2-dione (V).

Next, (V) 0.053 g (0.145 mmol) was dissolved in THF 0.1 ml, to which 12 N of hydrochloric acid 1.5 ml was added, and the mixture was stirred for 3 hours. After that, the reaction mixture was diluted with water 10 ml, and washed with $CH_2Cl_2$ (10 ml) once. Water in the aqueous layer was distilled away to give 3-hydroxy-4-(2,3,4,5,6-pentafluorophenyl)-cyclobutene-3-en-1,2-dione (VI) 23 mg. The structure was confirmed by using $^{19}F$ NMR. $^{1}H$ NMR did not show a peak. The purity was confirmed by using HPLC and was 99% or more.

Next, in a vessel having an internal volume of 20 ml were put poly(N-vinylpyrrolidone) (made by Aldrich, hereinafter referred to as "PVP") 32.5 mg, (III) synthesized above 23.0 mg (0.0871 mmol) and ion-exchanged water 3. 0 ml, which was stirred at room temperature for 30 minutes to give a homogeneous solution. The solution was spread in a petri dish, and water was distilled away at 80°C to give a membrane (g) having a thickness of 158 μm. The proton conductivity of (g) is shown in Table 1.

The difference in heat of formation ΔE (g) was -89.9 kcal/mol.

Table 1

| | Proton conductivity (S/cm) | Difference in heat of formation ΔE |
|---|---|---|
| Temperature and humidity conditions | 80°C, 70%RH | Kcal/mol |
| Example 1 (f) | $2.1X10^{-3}$ | -78.6 |
| Example 2(g) | $3.5X10^{-3}$ | -89.9 |

(Table 1 shows proton conductivities and differences in heat of formation ΔE.)

The electrolytes of the present invention containing the oxocarbon group satisfying the specific formula are useful as materials for proton conductive membranes in solid polymer fuel cells utilizing a gas fuel such as hydrogen gas or a liquid fuel suchasmethanol or dimethyl ether, that is, materials for polymer electrolytes. The electrolytes of the present invention are advantage in practical uses, for example, since the electrolytes of the present invention have higher proton conductivities than electrolytes which do not satisfy the formula do, it is expected that the electrolytes of the present invention show high power generation characteristics when they are used as proton conductive membranes of fuel cells.

## Claims

1. An electrolyte comprising an oxocarbon molecule, wherein the oxocarbon molecule has a difference in heat of formation ΔE defined as:

$$\Delta E = E_2 - E_1 \text{ (kcal/mol)}$$

satisfying the range of:

$$\Delta E < -70 \text{ (kcal/mol)},$$

wherein $E_1$ (kcal/mol) is a heat of formation in the state where a hydrogen ion is non-dissociated, and $E_2$ (kcal/mol) is a heat of formation in the state where a hydrogen ion having the lowest dissociation energy in the molecule is dissociated, both being calculated in accordance with a molecular orbital method, and
wherein the oxocarbon molecule in the state where a hydrogen ion is non-dissociated is, in a free acid form, represented by the following formula (1):

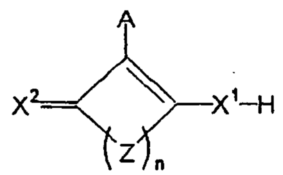
(1)

wherein $X^1$ and $X^2$ are each independently -O-, -S- or -NR-; Z is -CO-, -C(S)-, -C(NR')-, an alkylene group that may

have a substituent or an arylene group that may have a substituent, in which R and R' are each independently hydrogen atom, an alkyl group having 1 to 6 carbon atoms that may have a substituent, or an aryl group having 6 to 10 carbon atoms that may have a substituent; n is the number of repeating units of an integer of 0 to 10; n pieces of Z may be the same as or different to each other; and A is a monovalent hydrocarbon group.

**2.** The electrolyte of Claim 1, wherein the state where a hydrogen ion having the lowest dissociation energy in the molecule is dissociated is represented by the following formula (2) :

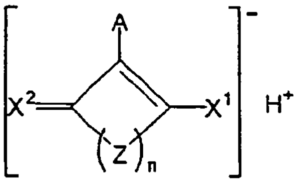

(2)

wherein $X^1$, $X^2$, Z, n and A are the same as defined above.

**3.** The electrolyte of Claim 1, wherein the oxocarbon molecule has a difference in heat of formation ΔE of

$$\Delta E<-75 \text{ (kcal/mol)}.$$

**4.** The electrolyte of Claim 1, wherein Z is -CO-, -C(S) - or -C(NH)-.

**5.** The electrolyte of claim 1, wherein $X_1$ and $X_2$ are -O-, Z is -CO-, and n is an integer of 0 to 2.

**6.** A polymer electrolyte comprising the electrolyte of any one of Claims 1 to 5 as an effective component.

**7.** A polymer electrolyte membrane comprising the polymer electrolyte of Claim 6.

**8.** A cell comprising at least one of the polymer electrolyte of Claim 6 and the polymer electrolyte membrane of Claim 7.

**9.** A fuel cell comprising at least one of the polymer electrolyte of Claim 6 and the polymer electrolyte membrane of Claim 7.

**Patentansprüche**

**1.** Ein Elektrolyt umfassend ein Oxycarbonmolekül, wobei das Oxycarbonmolekül einen Unterschied in der Bildungswärme ΔE aufweist, definiert als:

$$\Delta E = E_2\text{-}E_1 \quad \text{(kcal/mol)},$$

welcher dem Bereich:

$$\Delta E < -70 \text{ (kcal/mol)}$$

genügt, wobei $E_1$ (kcal/mol) eine Bildungswärme in dem Zustand ist, in dem ein Wasserstoffen nicht dissoziiert ist, und $E_2$ (kcal/mol) eine Bildungswärme in dem Zustand ist, in dem ein Wasserstoffion mit der niedrigsten Dissoziationsenergie in dem Molekül dissoziiert ist, beide berechnet gemäß einer Molekülorbitalmethode, und
wobei das Oxycarbonmolekül in dem Zustand, in dem ein Wasserstoffion nicht dissoziiert ist, in Form einer freien Säure durch die folgende Formel (1) dargestellt ist:

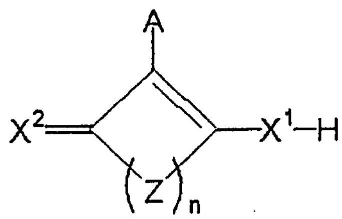

(1)

,

wobei $X^1$ und $X^2$ jeweils unabhängig -O-, -S- oder -NR- sind; Z-CO-, -C(S)-, -C(NR')-, ein Alkylenrest, welcher einen Substituenten tragen kann oder ein Arylenrest, welcher einen Substituenten tragen kann ist, wobei R und R' jeweils unabhängig voneinander ein Wasserstoffatom, ein Alkylrest mit 1 bis 6 Kohlenstoffatomen, welcher einen Substituenten tragen kann, oder ein Arylrest mit 6 bis 10 Kohlenstoffatomen, welcher einen Substituenten tragen kann, sind; n die Anzahl von Wiederholungseinheiten mit einer ganzen Zahl von 0 bis 10 darstellt; n Einheiten von Z gleich oder unterschiedlich voneinander sein können; und A ein monovalenter Kohlenwasserstoffrest ist.

**2.** Der Elektrolyt gemäß Anspruch 1, wobei der Zustand, in dem ein Wasserstoffion mit der niedrigsten Dissoziationsenergie in dem Molekül dissoziiert ist, durch die folgende Formel (2) dargestellt ist:

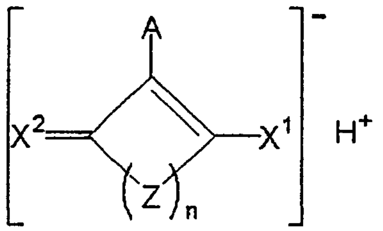

(2)

,

wobei $X^1$, $X^2$, Z, n und A wie vorstehend definiert sind.

**3.** Der Elektrolyt gemäß Anspruch 1, wobei das Oxycarbonmolekül einen Unterschied in der Bildungswärme ΔE von

$$\Delta E < -75 \text{ (kcal/mol)}$$

aufweist.

**4.** Der Elektrolyt gemäß Anspruch 1, wobei Z die Bedeutung -CO-, -C(S)- oder -C(NH)-hat.

**5.** Der Elektrolyt gemäß Anspruch 1, wobei $X^1$ und $X^2$ die Bedeutung -O- haben, Z -COist, und n eine ganze Zahl von 0 bis 2 ist.

**6.** Ein Polymerelektrolyt umfassend den Elektrolyten gemäß einem der Ansprüche 1 bis 5 als wirksamen Bestandteil.

**7.** Eine Polymerelektrolytmembran, umfassend den Polymerelektrolyten gemäß Anspruch 6.

**8.** Eine Zelle, umfassend wenigstens einen Polymerelektrolyten gemäß Anspruch 6 und die Polymerelektrolytmembran gemäß Anspruch 7.

**9.** Eine Brennstoffzelle umfassend wenigstens einen Polymerelektrolyten gemäß Anspruch 6 und die Polymerelektrolytmembran gemäß Anspruch 7.

**Revendications**

1. Electrolyte comprenant une molécule oxocarbonée, où -la molécule oxocarbonée a une différence dans la chaleur de formation $\Delta E$ définie comme étant :

$$\Delta E = E_2 - E_1 \text{ (kcal/mol)}$$

satisfaisant la plage de :

$$\Delta E < -70 \text{ (kcal/mol)},$$

où $E_1$ (kcal/mol) est une chaleur de formation dans l'état dans lequel un ion hydrogène est non dissocié, et $E_2$ (kcal/mol) est une chaleur de formation dans l'état dans lequel un ion hydrogène ayant la plus basse énergie de dissociation dans la molécule est dissocié, l'une et l'autre étant calculées selon un procédé à orbitales moléculaires, et où la molécule oxocarbonée dans l'état dans lequel un ion hydrogène est non dissocié est, dans une forme d'acide libre, représentée par la formule (1) suivante :

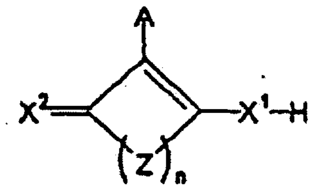
(1)

où $X^1$ et $X^2$ sont chacun indépendamment -O-, -S- ou -NR- ; Z est - CO-, -C(S)-, -C(NR')-, un groupe alkylène qui peut avoir un substituant ou un groupe arylène qui peut avoir un substituant,
où R et R' sont chacun indépendamment un atome d'hydrogène, un groupe alkyle ayant 1 à 6 atomes de carbone qui peut avoir un substituant, ou un groupe aryle ayant 6 à 10 atomes de carbone qui peut avoir un substituant ; n est le nombre d'unités répétées d'un entier de 0 à 10 ; n unités de Z peuvent être identiques ou différentes les unes des autres ; et A est un groupe hydrocarboné monovalent.

2. Electrolyte selon la revendication 1 où l'état dans lequel un ion hydrogène ayant la plus basse énergie de dissociation dans la molécule est dissocié est représenté par la formule (2) suivante :

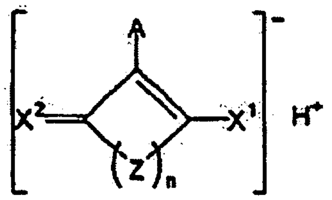
(2)

où $X^1$, $X^2$, Z, n et A sont les mêmes que ceux définis ci-dessus.

3. Electrolyte selon la revendication 1 où la molécule oxocarbonée a une différence dans la chaleur de formation $\Delta E$ de

$$\Delta E < -75 \text{ (kcal/mol)}.$$

4. Electrolyte selon la revendication 1 où Z est -CO-, -C(S)- ou -C(NH)-.

**5.** Electrolyte selon la revendication 1 où $X^1$ et $X^2$ sont -O-, Z est - CO-, et n est un entier de 0 à 2.

**6.** Electrolyte polymère comprenant l'électrolyte selon l'une quelconque des revendications 1 à 5 comme composant efficace.

**7.** Membrane à électrolyte polymère comprenant l'électrolyte polymère selon la revendication 6.

**8.** Pile comprenant au moins l'un de l'électrolyte polymère selon la revendication 6 et de la membrane à électrolyte polymère selon la revendication 7.

**9.** Pile à combustible comprenant au moins l'un de l'électrolyte polymère selon la revendication 6 et de la membrane à électrolyte polymère selon la revendication 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5438082 A
- JP 2003277501 A
- US 5403675 A
- US 6099988 A
- JP 11340097 A
- JP 2123723 A
- US 6004698 A
- JP 2005108459 A
- JP 11111310 A
- JP 6029032 A


### Non-patent literature cited in the description


- Oxocarbons. Academic Press, 1980, 45
- *Journal of the American Chemical Society,* 1973, vol. 95, 8703
- *J. Membrane Science,* 1993, vol. 83, 211
- *Journal of Organic Chemistry,* 1988, vol. 53 (2482), 2477
- *Heterocycles,* 1988, vol. 27 (5), 1191
- *Journal of Organic Chemistry,* 1990, vol. 55, 5359
- *TetrahydronLetters,* 1990, vol. 31 (30), 4293
- *Synthesis,* 1974, 46
- Experimental Method of Polymer Synthesis. Kagaku-Dojin Publishing Company, Inc, 1972, 125-357
- *J. Electrochem. Soc.: Electrochemical Science and Technology,* 1988, vol. 135 (9), 2209